# EUROPEAN PATENT APPLICATION

(11) **EP 4 287 401 A1**
(43) Date of publication of application: **06.12.2023**
(21) Application number: 22176818.7
(22) Date of filing: 01.06.2022
(51) Int. Cl.: H01Q 1/32, H01Q 1/42, H01Q 17/00

(54) **RADAR WITH SCATTERING OPTIMIZED ABSORBER**

(71) Applicant: Aptiv Technologies Limited, St. Michael (BB)
(72) Inventor: TALAI, Armin, 90431 Nürnberg (DE); LEONARDI, Roberto, 90403 Nürnberg (DE)
(74) Representative: Hoffmann Eitle

(57) **Abstract**

Provided is a radar sensor comprising at least one antenna 1 having a FOV 2, at least one RF absorber 9, and a radome 3 covering the at least one antenna 1 and the at least one RF absorber 9, wherein the at least one RF absorber 9 is provided with a top surface 10 comprising at least one scattering structure configured to redirect radar waves out of the FOV 2 and to increase radar wave scattering interactions with the radome 3 and the at least one RF absorber 9. As a result, energy of scattered waves and of backwards radiation is reduced. Further, the amount of RF absorber material is reduced and the RCS of the radar sensor is reduced.

## Description

### TECHNICAL FIELD

The present disclosure generally relates to a radar sensor, a vehicle comprising a radar sensor, a method of manufacturing a radar sensor and an RF absorber for a radar sensor.

### BACKGROUND

Radar sensors typically contain one radar antenna or a plurality of radar antennas as an antenna array. To protect the one or more antennas a radome may be provided.

Radomes usually are injection molded plastic parts and located in front of the antennas to protect them from the environment (e.g. dust, moisture, etc.). Those radomes may also cover radio frequency (RF) absorbing attachments next to the instrumented field of view (FOV) of the antennas. These so called "absorbers" or "RF absorbers" are provided for several reasons. For one, they can minimize ripples on the antenna's gain and phase pattern. Also, they can minimize the amount of energy radiated outside the antenna's FOV.

Molded RF absorbers themselves comprise a not insignificant reflection level caused by their usually large permittivity value. Therefore, in the current state of the art RF absorbers are geometrically shaped on their surface that directly faces the antennas to minimize amount of energy reflected back towards the antennas.

### SUMMARY

Radar sensors are however susceptible to scenarios where radar waves scatter internally. The radome may contribute to the scattering and may even guide scattered radar waves through the radome material without interacting with the RF absorber. This guiding results in weakly attenuated radar waves exiting the radar sensor outside its (or the antenna's) FOV. This guiding becomes particularly troublesome, if radar waves are reflected inside the radome material in such manner, that they propagate in a backwards direction with respect to the radar sensor's intended sensing direction.

When radar signals scattered in such manners are reflected by objects outside the FOV and/or behind the radar sensor, false detections or ghosting may occur. When deployed in safety critical systems (e.g. a vehicle) these false detections or ghosting signals bear a safety risk. Also, when subject to such complex scattering scenarios, calibration of the radar sensor becomes difficult.

Therefore, the present disclosure has an object to address the technical problems identified above. The subject-matter of the independent claims solves the technical problems identified above. The dependent claims describe further preferred embodiments.

According to a first aspect of the present disclosure, a radar sensor comprises at least one antenna having a field of view, at least one RF absorber, and a radome covering the at least one antenna and the at least one RF absorber. Herein the at least one RF absorber is provided with a top surface comprising at least one scattering structure configured to redirect radar waves out of the field of view and to increase radar wave scattering interactions with the radome and the at least one RF absorber.

According to a second aspect of the present disclosure, the top surface of the at least one RF absorber is at least partially embedded into the radome.

According to a third aspect of the present disclosure, the scattering structure comprises at least one structure being a recess and/or a protrusion.

According to a fourth aspect of the present disclosure, the shape of the recess and/or protrusion is an omnidirectional scattering shape.

According to a fifth aspect of the present disclosure, the shape of the recess and/or protrusion is a non-specular reflection shape.

According to a sixth aspect of the present disclosure, the shape of the recess is concave and the shape of the protrusion is convex.

According to a seventh aspect of the present disclosure, an inside surface of the recess and/or an outside surface of the protrusion comprises a predefined surface texture roughness or indentation.

According to an eight aspect of the present disclosure, the predefined surface texture roughness or indentation is of a scale smaller than or equal to 1/10 of a wavelength of the radar wave emitted by the at least one antenna.

According to a nineth aspect of the present disclosure, the scattering structure comprises a plurality of structures, wherein some of the plurality of structures have different shapes and/or different dimensions.

According to a tenth aspect of the present disclosure, the radome has a variable thickness along its length.

According to an eleventh aspect of the present disclosure, the radome has a first area facing the at least one antenna and a second area facing the at least one RF absorber. Herein a first thickness of the radome of the first area is larger than a second thickness of the radome of the second area.

According to a twelfth aspect of the present disclosure, the second thickness is variable corresponding to the structure change of the RF absorber.

According to thirteenth aspect of the present disclosure, the RF absorber is placed outside the field of view of the at least one antenna.

According to a fourteenth aspect of the present disclosure, the RF absorber is interfacing with the radome.

According to a fifteenth aspect of the present disclosure, a vehicle comprises a radar sensor according to any one of the preceding aspects.

According to a sixteenth aspect of the present disclosure, a method of manufacturing a radar sensor comprises shaping a radome with a surface comprising at least one location with an inverse scattering structure, shaping at least one RF absorber with a top surface comprising a scattering structure having a complementing shape corresponding to the inverse scattering structure, and providing each of the at least one RF absorber onto the corresponding at least one location of the surface of the radome. Herein the scattering structure and the inverse scattering structure have at least one structure being a recess and/or a protrusion.

As a result of the aspects summarized above, the energy of scattered waves and of backwards radiation is reduced. As an additional benefit, this technical effect is achieved whilst reducing the amount of RF absorber material and the RCS of the radar sensor, when compared to radar sensors of the state of the art.

### BRIEF DESCRIPTION OF THE DRAWINGS

Fig. 1: A cross-section of a radar sensor according to the state of the art for illustration of scattering behavior.
Fig. 2: A cross-section of a radar sensor according to an embodiment of the present disclosure for illustration of the scattering behavior.
Fig. 3: 3D illustration of a radar sensor according to an embodiment of the present disclosure for illustration of functionality aspects of an omnidirectional scattering recess.
Fig. 4: A cross-section of a radar sensor according to the state of the art for illustration of backwards radiation behavior.
Fig. 5: A cross-section of a radar sensor according to an embodiment of the present disclosure for illustration of backwards radiation behavior.
Fig. 6: 3D illustration of a radar sensor according to the state of the art for illustrating the amount of reflected energy compared to incident energy.
Fig. 7: 3D illustration of a radar sensor according to an embodiment of the present disclosure for illustrating the amount of reflected energy compared to incident energy.
Fig. 8: Simulation result to compare RCS of flat absorber top surface according to the state of the art and of an absorber top-surface according to an embodiment of the present disclosure.
Fig. 9: Simulation result of azimuth angle error of an exemplary radar sensor according to the state of the art.
Fig. 10: Simulation result of azimuth angle error of an exemplary radar sensor according to an embodiment of the present disclosure.

### DETAILED DESCRIPTION OF EMBODIMENTS

Radar waves emitted from the antennas travel through the radome material before entering the environment targeted by the radar sensor for sensing. This radome material may deflect, reflect or scatter radar waves. RF absorbers in contact with the radome are involved in a scenario where the radar waves are scattered within the radome material. This scenario is also referred to as a "radar sensor internal scattering scenario", can be complex and can result in radar waves emitting from the radar sensor in different (and unwanted) directions. The level of control for this scenario correlates to the achieved calibrated angular accuracy and the outside FOV radiation.

Specifically, when the radome covers the RF absorber, the RF absorber is involved in reflections between the surface of the radome not facing the antennas (i.e. the "radome top-surface") and the surface of the RF absorber facing (and/or in contact with) the radome material (i.e. the "absorber top-surface"). Each antenna of the radar sensor will cause a different position related scattering scenario at the absorber top-surface.

The current state of the art considers the absorber top-surface facing the radome to be flat. When the radome material is in contact with the absorber top-surface, the contact is also referred to as an "interface". This flat absorber top-surface or interface can lead to radar waves scattering from the absorber top-surface into the radar sensor's FOV. Because this FOV is directed into the same direction (or elevation plane) for the scattered waves as for incoming radar waves (i.e. reflected from a target), scattering inside the radome material can lead to additional distortions inside the FOV and subsequently, a worse sensing and calibration result.

In addition to those angle accuracy related scattering issues by the absorber top-surface, the current state of the art may allow higher scattering levels passing around the RF absorber. Put differently, radar waves may be reflected or scattered within the radar sensor (i.e. between the radome top-surface and the absorber top-surface) in a guided way, allowing the radar waves to travel over and around the RF absorber. When the absorber top-surface is interfacing with the radome material, the radome may even act as a guide enabling internal reflection of the radar waves. Radar waves guided through the radar sensor may exit the radar sensor at its edge, also in a direction opposite to the radar sensor's FOV, resulting in so-called "backwards radiation". Such scattering may cause ghost target issues based on outside FOV radiation. Detection of ghost targets is an issue in safety critical sensing systems, e.g. when the radar sensor is integrated in a vehicle.

The current state of the art does not cover a scattering optimized absorber top-surface, wherein this top-surface will be covered by the radome and/or interfacing with a surface of the radome facing the antennas (i.e. the "radome bottom-surface") when assembled in the radar sensor.

Therefore, the present disclosure addresses the technical problems or drawbacks occurring when energy is directionally scattered by the absorber top-surface into the radar sensor's FOV and when energy is scattered around the RF absorbers leading to high levels of backwards radiation.

The subject-matter of the independent claims overcomes the drawbacks explained above. The dependent claims describe further preferred embodiments. The present disclosure overcomes the drawbacks by providing a shape of the absorber top-surface (or shape of the interface between the RF absorber and the radome material) that increases radar wave scattering interactions with the RF absorber.

Because RF absorber scatters radar waves to increase the (number of) interactions of the radar waves with the RF absorber, more of the scattered radar wave energy can be absorbed. As a result, the amount of radio wave scattering energy scattered and backwards radiation energy is reduced. This reduction improves both the azimuth angle finding accuracy and the elevation angle finding accuracy. At the same time, this RF absorber shape enables a control factor to improve outside FOV radiation to mitigate detection of potential ghost targets by the radar sensor. Because scattered energy from the RF absorber can be controlled, both distortion within the radar sensor's instrumented FOV can be minimized and the energy level of backwards radiation can be controlled in order to prevent ghost target detection. These benefits are of particular interest on a vehicle integration level.

According to the present disclosure, the technical problems or drawbacks explained above are solved by at least partially embedding or extruding the RF absorber into the radome material and/or by applying one or more scattering optimized recesses or inserts into the absorber top-surface.

As an embodiment of the present disclosure, a radar sensor is provided, wherein the radar sensor comprises at least one antenna 1 having a field of view 2, at least one RF absorber 9, and a radome 3 covering the at least one antenna 1 and the at least one RF absorber 9, wherein the at least one RF absorber 9 is provided with a top surface 10 comprising at least one scattering structure configured to redirect radar waves out of the field of view 2 and to increase radar wave scattering interactions with the radome 3 and the at least one RF absorber 9. Herein, the materials of the RF absorber 9 and the radome 3 have a different relative permittivity. Specifically, the material of the RF absorber 3 may have a higher relative permittivity than the material of the radome 3.

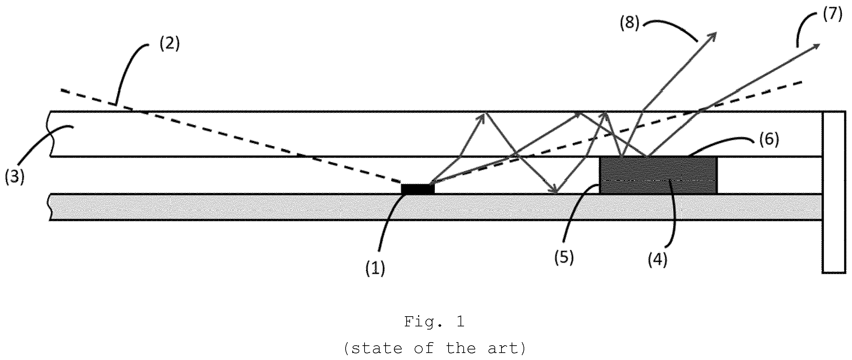

Fig. 1 illustrates a cross-section of a radar sensor according to the state of the art and its scattering behavior. A radar antenna (array) 1 on an antenna board may comprise a predetermined instrumented FOV 2, which may be a wide azimuth FOV of 150° within -75° to +75° about normal of the radar sensor's elevation plane. In general, the emitted radiation by the antenna does not stop at ±75° but can be present up to ±90°. A radome 3 is covering the antenna 1 to protect it (and its sensor/s) from the environment. A RF absorber 4 is provided as part of the radar sensor and is placed outside the FOV 2 to block radiation towards areas that shall not be illuminated by emitted radar waves. This RF absorber 4 has a reflection minimized shape on its surface orientated towards the antenna 1 (i.e. the "absorber side-surface" 5). Furthermore, the RF absorber 4 has a flat absorber top-surface 6 facing towards or interfacing with the radome 3. The absorber side-surface 5 and the flat absorber top-surface 6 are shaped according to current state of the art.

The reflection paths 7 and 8 depicted in Fig. 1 show that reflection paths exist between the radome top-surface, the antenna board and the flat absorber top-surface 6. A flat absorber top-surface 6 will mainly pass the bouncing energy under the same elevation angle as the incidence wave originates from. Due to a high dielectric constant (DK) value of the RF absorbers 4 (e.g. DK ≥ 10), the amount of reflected energy will not be insignificant. Subsequently, the reflected energy from the RF absorber will likely add phase distortion inside the FOV, increasing azimuth and elevation angle error of the Radar sensor.

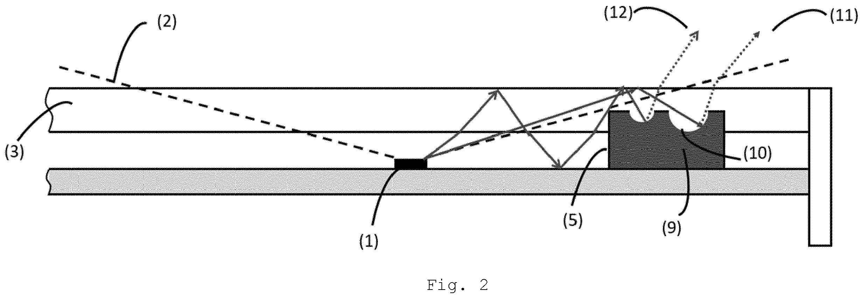

Fig. 2 illustrates a cross-section of a radar sensor according to an embodiment of the present disclosure and shows a RF absorber 9 shaped to increase radar wave scattering interactions with the RF absorber 9. This RF absorber 9 comprises two properties:
a) the RF absorber 9 is partially moved, extruded or embedded into the radome 3; and
b) the RF absorber 9 has an absorber top-surface 10 with a scattering structure.

At least one of the two properties may be applied to solve the drawbacks explained above.

Herein, property a) decreases both the remaining thickness of the radome 3 and (consequently) the spatial angle for traveling radar waves inside the radome 3. This enforces additional interactions with the RF absorber 9 for the passing radar waves, reducing the energy of this not wanted propagation path and (consequently) the backwards radiation energy.

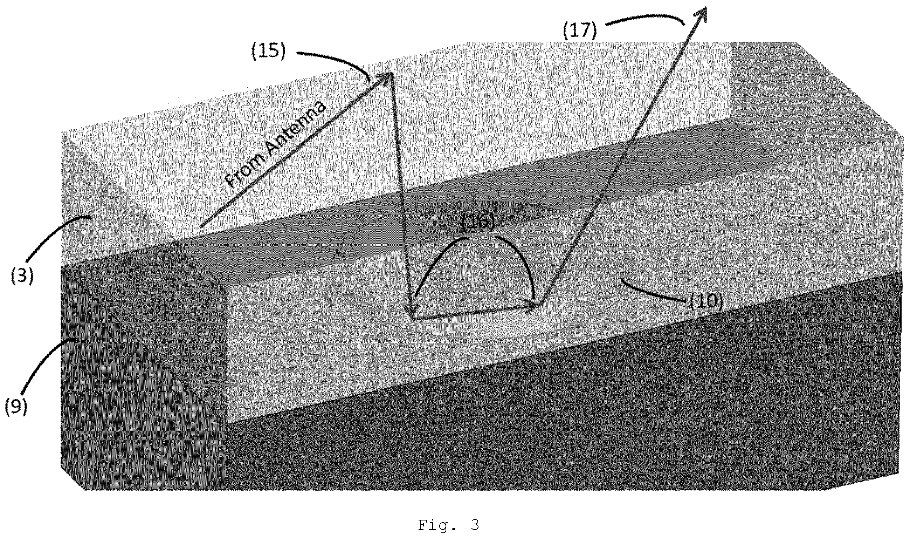

Regarding property b) the depicted reflection paths 11 and 12 show that reflections from the scattering structure lead to a non-specular (or diffuse) reflection behavior, which includes deflection of the radar waves into high elevation planes that are outside the FOV 2, indicated by the dotted lines. Furthermore (and as illustrated in Fig. 3) the number of radar wave scattering interactions (indicated as interaction points 16) is increased by the scattering structure, thereby reducing the energy of this not wanted propagation path.

Also, by providing the absorber top-surface 10 with the scattering structure, the amount of material necessary to manufacture the RF absorber 9 can be reduced in comparison to a RF absorber 4 with a flat absorber top surface 6. Specifically, it becomes possible to reduce the amount of material by 50 % whilst increasing the scattering interactions with the RF absorber 9.

Fig. 3 illustrates a part of a radar sensor according to an embodiment of the present disclosure and with focus on additional functionality by the absorber top-surface 10. An illustrated radar wave 15 originated from an antenna 2, may reflect at the radome top-surface 15 and hits the absorber top-surface 10. Due to the nature of the proposed surface shape of the scattering structure, e.g. featuring one or more omnidirectional and/or specular inserts and/or recesses, the radar wave can reflect more than one time on the RF absorber 9 before being directed towards the radome 3. In this context, the term "omnidirectional" means that an incident wave which approaches the absorber top-surface 10 may be reflected not under the same angle with negative sign, but the reflected energy may be distributed within multiple (ideally all) angles in the FOV of (e.g. a full half sphere above) the antenna 2. As a consequence, the reflected energy to any single direction is low(er) and may have no further negative impact on calibration of the radar sensor. By this configuration of the absorber top-surface 10, the number of interactions of the radar wave with the RF absorber 9 are increased, reducing further the amplitude of this unwanted propagation path. Ultimately, the emitted radar wave 17 may reflect to an elevation angle outside the FOV and at an energy level which will not disturb the radar sensor.

Therefore, as a further preferred embodiment of the present disclosure, the top surface 10 of the at least one RF absorber 9 may be at least partially embedded into the radome 3 and/or the scattering structure may comprise at least one (spatial) structure being a recess and/or a protrusion. Thereby, phase distortion arising from top-surface absorber reflections is decreased, which can reduce the azimuth and elevation angle angular errors by the radar sensor.

As a further preferred embodiment of the present disclosure, the shape of the recess may be concave and/or the shape of the protrusion may be convex. That is to say, the shape of the recess and/or protrusion (i.e. of the shape of spatial structure) may be an omnidirectional scattering shape, a non-specular reflection shape, a concave shape and/or a convex shape like a spherical insert or half-sphere cutout. Such inserts or cutouts can reduce the reflected energy by 1 dB. The recess and/or protrusion (i.e. the spatial structure) may also be a linear slot or linear cut extending into the at least one RF absorber 9.

As a further preferred embodiment of the present disclosure, an inside surface of the recess and/or an outside surface of the protrusion (i.e. a surface describing the spatial structure) may comprise a predefined surface texture roughness, indentation or unevenness. Specifically, the predefined surface texture (roughness, indentation or unevenness) may be of a scale smaller than or equal to 1/10 (one tenth) of a wavelength of the radar wave emitted by the at least one antenna 1. That is to say, given the antenna 2 emits radar waves at a predetermined wavelength, a sufficient roughness, indentation or unevenness may be achieved by any structure as small as the wavelength (also referred to as "lambda") divided by 10 or smaller. Thereby the omnidirectional and non-specular scattering occurs at an even smaller scale, further increasing the scattering interactions with the RF absorber 9. To further improve the non-specular scattering by the RF absorber 9 the absorber top-surface 10 (i.e. including or not including the inside surface of the recesses or inserts) may be roughened.

As a further preferred embodiment of the present disclosure, the scattering structure may comprise a plurality (e.g. at least two) (spatial) structures, wherein some of the plurality of (scattering) structures may have different shapes, different dimensions and/or different sizes. Herein, the difference may be motivated by the radiation direction or polarization of the antenna 2. Also, the spatial structure may be shaped uniformly or irregularly. A preferred size of a spatial structure may be 0.1 mm (e.g. the diameter of a spherical insert or half-sphere cutout, or the spacing/width of the linear slots or cuts). The shape and/or size may also be made dependent on the wavelength of the radar waves emitted by the antenna 2. In this case, the shape and/or size may follow a half-wavelength (or half-lambda) dimensioning.

As a further preferred embodiment of the present disclosure, the radome 3 and/or the RF absorber 9 may have a variable thickness along its (i.e. the RF absorber's 9) length (direction). The variable thickness of the radome 3 may be to better direct reflections from the radome top-surface 15 towards recesses of the RF absorber 9. The variable thickness of the RF absorber 9 may be to avoid or compensate for components placed below the RF absorber 9. For example, a wave guide may be positioned below the RF absorber 9 and must still be covered by material of the RF absorber 9. Also, the shape of the absorber side-surface 5 may require that the RF absorber 9 (or recesses close to the absorber side-surface 5) be adjusted thereto.

Therefore, as a further preferred embodiment of the present disclosure, the radome 3 may have a first area facing the at least one antenna and a second area facing the at least one RF absorber 9, wherein a first thickness of the radome 3 of the first area is larger than a second thickness of the radome 3 of the second area. As a further preferred embodiment of the present disclosure, the second thickness may be variable corresponding to the structure change of the RF absorber 9. That is to say, the thickness variation may be due to the absorber top-surface 10 having (spatial) structure(s) as described above. Therefore, the interface surface between RF absorber 9 and the radome 3 is increased and the advantages of the scattering optimized absorber top-surface 10 are obtained in addition to reducing the thickness of the radome 9 at the interface with the RF absorber 9.

As a further preferred embodiment of the present disclosure, the RF absorber 9 may be placed outside the field of view 2 of the (at least one) antenna 1. That is to say, the RF absorber 9 may still interfere with the FOV of some of the antennas of an antenna array, as long as it does not interfere with some of the FOVs of the antennas of the antenna array. Nonetheless, although it is possible to position the RF absorber 9 such that it intersects with the FOV 2 of an antenna 1 (e.g. to further limit its FOV based on the specific application) it is preferable that the RF absorber 9 is located outside the FOV 2 of the antenna 1. This preference is because an intersecting RF absorber 9 would add attenuation to the radar sensor at the interaction angles with the RF absorber 9, leading to strong roll-off on the gain pattern. Therefore, rather than shaping the FOV by letting the RF absorber 9 intersect, it is preferable to design the antenna 1 with an application specific FOV and place the RF absorber 9 outside the FOV 2 of the antenna 1.

As a further preferred embodiment of the present disclosure, the RF absorber 9 may be interfacing (or in contact) with the radome 3. That is to say, the RF absorber 9 may be mechanically coupled with/to the radome 2 with a corresponding shape or surface structure. Thereby, an air-gap between radome 3 and RF absorber 9 adding less predictable radar wave refractions to the already complex scattering scenario is removed.

As another embodiment of the present disclosure, a vehicle may be provided, wherein the vehicle comprises the radar sensor described above.

As another embodiment of the present disclosure a method of manufacturing a radar sensor is provided, wherein the method comprises (first) shaping a radome 3 with a surface comprising at least one location with an inverse scattering structure, (second) shaping at least one RF absorber 9 with a top structure 10 comprising a scattering structure having a complementing shape corresponding to the inverse scattering structure (of the radome 3), and providing each of the at least one RF absorber 9 onto the corresponding at least one location of the surface of the radome 3, wherein the scattering structure and the inverse scattering structure have at least one (spatial) structure being a recess and/or a protrusion.

As a further preferred embodiment of the present disclosure, the radome 3 may be shaped by injection-molding or 3D-printing, and the at least one RF absorber 9 may be shaped by injection-molding or 3D-printing.

Herein, when using (injection) molding manufacturing for both the radome 3 and the RF absorber 9, it is preferable that the radome 3 is formed first and the RF absorber 9 is formed second, by using the already formed radome 3 (i.e. said negative scattering structure) as a molding die of the forming process. It is, however, possible to form the radome 3 and the RF absorber 9 separately (and in an order opposite to the one above). Then, the RF absorber 9 may be slotted into its corresponding location on the surface of the radome 3 and may be held in place by adhesion, pressure or friction.

As another embodiment of the present disclosure, a RF absorber 9 may be provided for a radar sensor as described above (but not as part of an assembled system e.g. the radar sensor described above), wherein the RF absorber 9 is provided with a top surface 10 comprising a scattering structure with at least one structure being a recess and/or a protrusion. Herein, the top surface 10 (or absorber top-surface) may be a surface designed to face or interface with a radome 3.

### <Backwards Radiation>

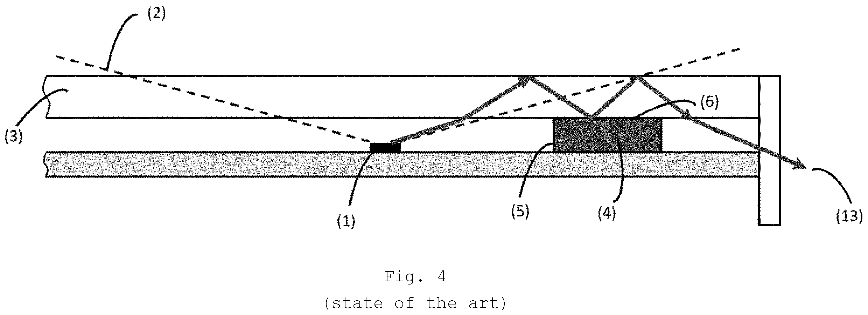

Fig. 4 illustrates a cross-section of a radar sensor according to the state of the art. Herein, the backwards radiation 13 is shown as a reflection path involving the flat absorber top-surface 6. The backwards radiation 13 is directed outside the antenna's FOV 2. As shown in Fig. 4 radar wave reflects between the radome top-surface and the flat absorber top-surface 6 before it exits the radar sensor at its edge at an azimuth angle > 90°, which is called backwards radiation 13. Depending on the design of the antenna 2, the energy level for backwards radiation 13 can be high enough to cause false positive detections when the radar sensor is integrated into a vehicle. Therefore, targets outside the antenna's FOV 2 reflecting the backwards radiation 13 may be picked up as ghost targets appearing as being positioned within the antenna's FOV 2.

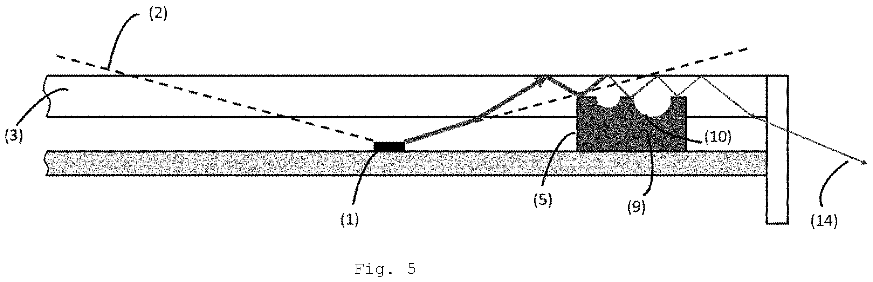

In contrast thereto Fig. 5 illustrates a cross-section of a radar sensor according to an embodiment of the present disclosure. Herein, the backwards radiation 14 is shown as a reflection path involving the absorber top-surface 10. Because the RF absorber 9 is (at least partially) moved, extruded or embedded in the radome 3, a radar wave is bouncing between the radome top-surface and the absorber top-surface multiple times; i.e. more often than in the scenario described in reference to Fig. 4 above. The increased number of bounces include an increased number of interactions with the RF absorber 9, reducing the energy of the radar wave with each interaction. As a result, the backwards reflected wave has a lower energy level. The one or more recesses or inserts also contribute thereto. Therefore, both (at least partially) inserting or moving the RF absorber 9 into the radome 3 and/or providing one or more recesses across the absorber top-surface 10 will reduce the spatial angle for radar waves traveling inside the radome 2 above the RF absorber 9 and will increase the number of scattering interactions with the RF absorber 9.

### <Scattering Interactions>

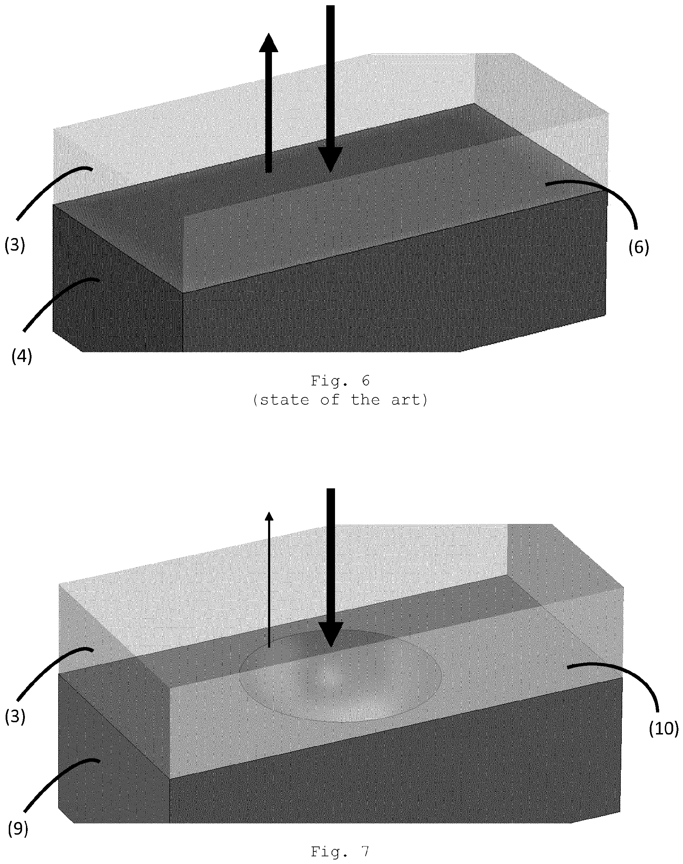

Fig. 6 illustrates a radar sensor according to the state of the art for illustrating the amount of reflected energy compared to incident energy. A (molded) RF absorber 4 with a flat absorber top-surface 6 absorbs some of the energy of incident waves. However, not all the energy is absorbed by the RF absorber 4. This is illustrated in Fig. 6 by an arrow pointing away from the RF absorber 4 (representing a reflected wave) only being marginally smaller than an arrow pointing towards the RF absorber 4 (representing an incident wave).

Fig. 7 illustrates a radar sensor according to an embodiment of the present disclosure for illustrating the amount of reflected energy compared to incident energy. Herein, a (molded) RF absorber 9 with an absorber top-surface 10 (comprising one or more inserts or recesses) increases the (number of) scattering interactions with the RF absorber 9 (i.e. as explained above in reference to Fig. 3). Thereby, more energy is absorbed by the RF absorber 9 in comparison to the RF absorber 4 illustrated in Fig. 6. This effect is illustrated in Fig. 7 by an arrow pointing away from the RF absorber 4 (representing a reflected wave) being significantly smaller than an arrow pointing towards the RF absorber 4 (representing an incident wave).

The improved absorption of a RF absorber 9 with an absorber top-surface 10 comprising one or more inserts or recesses also has the effect that a radar cross section (RCS) of the radar sensor is reduced. Therefore, energy of approaching waves (e.g. caused by multibounce reflections from a fascia of a vehicle) can also be reduced.

For example, when applied to a vehicle, the radar system's radar front face may reflect approaching waves and is thereby involved in multibounce reflections when a fascia is in front of the radar sensor. The radar front face has a certain RCS that can become significantly large as the size and/or surface area of radar sensors increases. Contributing to reflection of approaching waves also causes multibounce into the radar system's FOV and therefore increases angular error when radar system is integrated behind fascia. The absorber top-surface 10 according to the present disclosure reduces the RCS by the radar front face, thereby improving the angular accuracy by the radar sensor when integrated behind fascia.

### <Simulation Results>

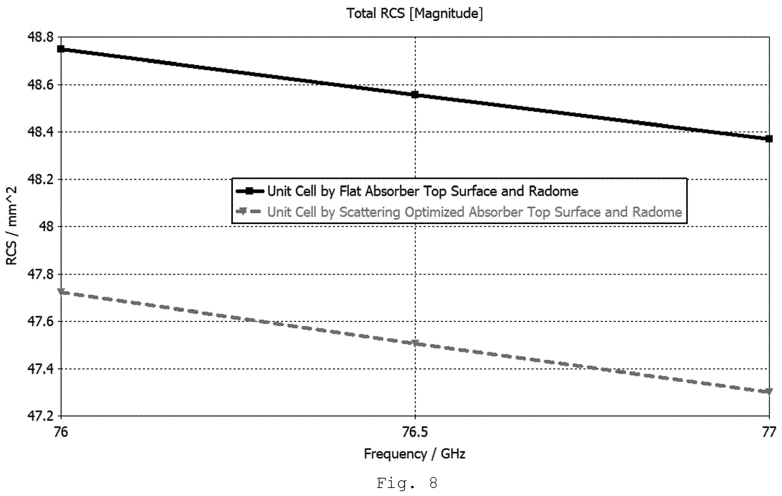

Fig. 8 illustrates simulation results comparing the RCS of flat absorber top-surface 6 (i.e. according to the state of the art) and the RCS of an absorber top-surface 10 (i.e. according to an embodiment of the present disclosure). Specifically, Fig. 8 illustrates the simulated RCS by an RF absorber and a radome unit cell in dB/(mm)², wherein a unit cell is a small area cut-out of a full radar sensor. A full radar sensor will be constituted by many of such unit cells. Therefore, results derived from simulating such a (cut-out) unit cell are applicable to a full radar system. The unit cell may be a portion containing a single (spatial) structure, e.g. a single recess or a single protrusion. Since a smaller RCS is better, it can be seen in Fig. 8 that the simulated unit cell featuring a scattering optimized absorber top-surface 10 outperforms the unit cell featuring a flat absorber top-surface 6. This is the case for a frequency band between 76 GHz and 77 GHz which covers frequencies typically used in radar applications.

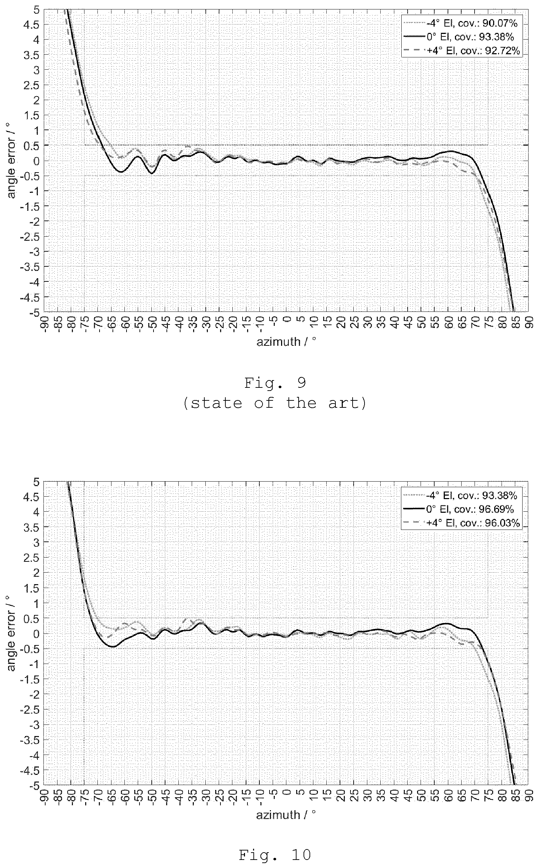

Fig. 9 and 10 illustrate and compare simulation results of azimuth angle errors of a radar sensor according to the state of the art and according to an embodiment of the present disclosure. For these simulations, the exemplary angular error limit is set to ±0.5° for an azimuth of ±75°. For both absorber top-surface 6 and 10, three elevation planes have been simulated, i.e. for -4° 0° and +4°.

As can be seen from comparing the two figures, the scattering optimized absorber top-surface 10 in Fig. 10 improves or broadens the range of coverage where this limit is achieved. Put differently, the simulated flat absorber top-surface 6 in Fig. 9 violates the angular error limit (on average) sooner (i.e. at azimuth angles closer to 0° or further from the FOV of ±75°) than the scattering optimized absorber top-surface 10.

Specifically, whilst the flat absorber top-surface 6 validates the error limit of ±0.5° at an azimuth between -65° and -70°, the scattering optimized absorber top-surface 10 validates the error limit at an azimuth of -70° or smaller. This means, for this comparative simulation, the angle error for azimuth values at the negative end of the range of the FOV of the radar sensor is reduced, allowing a better detection over a wider range of the entire FOV.

Also, as indicated in the legend, the coverages of the FOV for the three elevation planes is improved from a 90.07 % coverage for -4° elevation to 92.72 % coverage, from a 93.38 % coverage for 0° elevation to 96.69 % coverage and from 92.72 % coverage for +4° elevation to 96.03 % coverage. Therefore, the FOV coverage at an error limit of ±0.5° is on average improved by the scattering optimized absorber top-surface 10 by around 3 % in comparison to the flat absorber top-surface 6.

In summary, application of non-flat and scattering optimized shapes of the absorber top-surface 10 redirects unwanted radar waves out of the FOV and reduces the energy of unwanted propagation paths by increase radar wave (scattering) interactions with the radome 3 and the scattering optimized RF absorber 9.

## Claims

1. A radar sensor comprising:
at least one antenna (1) having a field of view (2);
at least one RF absorber (9); and
a radome (3) covering the at least one antenna (1) and the at least one RF absorber (9),
wherein the at least one RF absorber (9) is provided with a top surface (10) comprising at least one scattering structure configured to redirect radar waves out of the field of view (2) and to increase radar wave scattering interactions with the radome (3) and the at least one RF absorber (9).

2. The radar sensor according to claim 1, wherein the top surface (10) of the at least one RF absorber (9) is at least partially embedded into the radome (3).

3. The radar sensor according to claim 1 or 2, wherein scattering structure comprises at least one structure being a recess and/or a protrusion.

4. The radar sensor according to claim 3, wherein the shape of the recess and/or protrusion is an omnidirectional scattering shape.

5. The radar sensor according to claim 3 or 4, wherein the shape of the recess and/or protrusion is a non-specular reflection shape.

6. The radar sensor according to any one of claims 3 to 5, wherein the shape of the recess is concave and the shape of the protrusion is convex.

7. The radar sensor according to any one of claims 3 to 6, wherein an inside surface of the recess and/or an outside surface of the protrusion comprises a predefined surface texture roughness or indentation.

8. The radar sensor according to claim 7, wherein the predefined surface texture roughness or indentation is of a scale smaller than or equal to 1/10 of a wavelength of the radar wave emitted by the at least one antenna (1).

9. The radar sensor according to any one of claims 3 to 8, wherein the scattering structure comprises a plurality of structures, wherein some of the plurality of structures have different shapes and/or different dimensions.

10. The radar sensor according to any one of claims 1 to 9, wherein the radome (3) has a variable thickness along its length.

11. The radar sensor according to claim 10,
wherein the radome (3) has a first area facing the at least one antenna and a second area facing the at least one RF absorber (9); and
wherein a first thickness of the radome (3) of the first area is larger than a second thickness of the radome (3) of the second area.

12. The radar sensor according to claim 11, wherein the second thickness is variable corresponding to the structure change of the RF absorber (9).

13. The radar sensor according to any one of claims 1 to 12, wherein the RF absorber (9) is placed outside the field of view (2) of the at least one antenna (1).

14. The radar sensor according to any one of claims 1 to 12, wherein the RF absorber (9) is interfacing with the radome (3) .

15. A vehicle comprising a radar sensor according to any one of claims 1 to 14.

16. A method of manufacturing a radar sensor, comprising:
shaping a radome (3) with a surface comprising at least one location with an inverse scattering structure;
shaping at least one RF absorber (9) with a top surface (10) comprising a scattering structure having a complementing shape corresponding to the inverse scattering structure; and
providing each of the at least one RF absorber (9) onto the corresponding at least one location of the surface of the radome (3),
wherein the scattering structure and the inverse scattering structure have at least one structure being a recess and/or a protrusion.
